# EUROPEAN PATENT APPLICATION

(11) **EP 2 151 706 A1**
(43) Date of publication of application: **10.02.2010**
(21) Application number: 08013997.5
(22) Date of filing: 05.08.2008
(51) Int. Cl.: G02F 1/03, G02F 1/035, H04B 10/14

(54) **Electro-optical encoder, decoder and optical communication system**

(71) Applicant: SWET OPTICS GMBH, 60559 Frankfurt am Main (DE)
(72) Inventor: Petrov, Viktor, Dr., 64293 Darmstadt (DE)
(74) Representative: Meissner, Bolte & Partner

(57) **Abstract**

An electro-optical encoder, having a broadband light input, an electrical code signal input and an encoded optical signal output, comprising a Bragg grating (1) formed in a waveguide portion (3) of an electro-optical material (5) and a plurality of independently controllable phase shift means (7) associated to the Bragg grating (1), for generating wavelength encoded components of an input broadband light at the encoder output, in response to the application of code signals to the phase shift means (7).

## Description

The invention refers to an electro-optical encoder, having a broadband light input, an electrical code signal input and an encoded optical signal output for generating wavelength encoded components of an input broadband light at the encoder output, in response to the application of code signals to the phase shift means. Furthermore, the invention refers to a corresponding decoder and to an optical communication system comprising an encoder and decoder of this type.

Almost all presently available optical communication systems employ the WDM or DWDM principles to transmit information. The communication WDM or DWDM system that transmits information through N independent frequency channels has N independent lasers at the input, each of which is tuned to its individual frequency (wavelength). The frequency shift between two neighboring channels is typically 50 or 100 GHz. The coherent light emitted by each laser carries information. To encode information, amplitude modulation is typically used in each frequency channel. Information is transmitted in the form of a sequence of light pulses. For instance, the logic level «1» can correspond to the laser switched-on state, i.e., there is light, and the login level «0» can correspond to the laser switched-off state, i.e. there is no light. At the receiving end of the communication line, frequency demultiplexing occurs. After this, the amplitude light variations at a given wavelength are converted into corresponding photocurrent variations using a photodetector.

Along with well known advantages, such as a high information carrying capacity, the WDM or DWDM systems have important drawbacks. Among major drawbacks are problems associated with frequency (chromatic) dispersion of light pulses, amplitude decay of light during its propagation in an optical fiber, and also the problems associated with light losses during its propagation through individual optical components. These effects lead to either broadening of the light pulse, which results in a decreasing amplitude, or simply to decrease in the light pulse amplitude. As a result, the pulse amplitude (i.e., the signal level corresponding to «1») becomes so low that the signal reaching the receiving end will be classified as «0», which means that information will be lost.

One of the most efficient solutions of this problem is to use frequency modulation (FM) for data transmission. At present many researchers are in active search for most efficient algorithms of DSE-CDMA are intensively studied. It is necessary to note that each of the coding principles has its own merits and drawbacks.

One of the major problems met by the designers of the optical system employing the FM principles is development of a narrow-band light source with a rapid wavelength tuning, i.e, rapid frequency modulation. Note that it is required that a laser be rapidly tuned in frequency and simultaneously maintain all other parameters exactly the same, which makes such lasers expensive and complicated in exploitation.

Analysis of the state-of-the-art has shown that in spite of a progress in this field, the problem is still far from the optimal solution that would allow such a system to be brought to a consumer market. Development and design of optical communication systems employing the FM principles (or similar to them) for data transmission is, no doubt, a pressing problem. One more issue of importance should also be mentioned. No commonly accepted standards of FM coding exist for the optical range, which means that the developer who will suggest the most efficient coding algorithm can occupy a leading position in the telecommunication market. Therefore, the problem is important not only from the scientific and technical, but also from the economical viewpoint.

Recently, different multiplexing strategies, such as time and wavelength division multiplexing (TDM, WDM), have been intensively exploited and found numerous practical implementations in optical fiber networks. Recently different Code Division Multiple Access (CDMA) schemes have been proposed as an alternative to the above mentioned methods. Due to several advantages, CDMA had a rapid penetration into the mobile and satellite communication arena and is on the way to final commercialization for use in optical networks. CDMA technology is a more suitable technology in the burst traffic environment, where high transmission bandwidth utilization is required.

Optical CDMA (OCDMA) allows very flexible access of the large communication bandwidth available in optical fiber networks with a capability to conceal the data content. This is possible without relying on complex distributing nodes but with simple reconfiguration of codes at end user nodes. OCDMA is a well-suited technology for local area networks (LAN) where the bursty characteristic of the traffic and its decentralized structure make WDM bandwidth inefficient. OCDMA can increase the number users which access the same fiber channel without costly equipment requirements. That is why in future data, video and voice converged communications it is anticipated that CDMA systems will be considered as a breakthrough technology for meeting coming demands in Local Area Networks (LAN).

These networks are characterized by a large diversity in terms of protocols, services, infrastructures, transmission rates and clients. The customer base is very broad and spans from individual users all the way to enterprises and large corporations. Overall access networks are very dynamic and unpredictable. Customers are looking for inexpensive and transparent solutions for the development of efficient new access networks. Such heterogeneous networks will need to support differentiated service provisioning which can be achieved, to some extent, at the physical layer using CDMA coding properties.

The demands on CDMA designs are common for all-optical communication systems. These are: effective utilization of optical bandwidth, multi bit-rate transmission capability, high capacity, and all-optical signal processing capability to avoid speed (capacity) bottleneck of electronic components. For use in local or metropolitan area networks, CDMA technology is able to meet these demands in a most cost efficient way. In contrast to WDM and TDM, CDMA systems users share the same time intervals and frequency bands, and separation of different channels is achieved by assigning each user a unique code sequence with "optimum" correlation properties, thus optical CDMA has the advantage over WDM that the number of active users can be much larger than the number of available wavelengths. Optical CDMA can use optical processing to perform certain network applications like addressing and routing. Moreover, OCDMA systems allow asynchronous access to the network simplifying network management and control, while providing enhanced security.

Today, the proposed CDMA algorithms can be classified according to the following criteria: by signal processing on coherent versus non-coherent schemes, synchronous versus asynchronous architectures, by encoding method on time versus frequency domain, phase versus amplitude encoding, and by using optical source on broadband optical sources versus narrowband lasers. Furthermore, for effective network configuration and rearrangement, it is important to design different Network Elements (NE) such as transmitters, receivers, repeaters, add-drop (ADM) and cross-connect (CCM) multiplexers.

OCDMA network topology duplicates in optics the spread spectrum techniques employed currently in wireless communication systems. Although CDMA has proven its efficacy at the wireless systems, the realization of signal processing features in an optical domain still has some difficulties. For reliable and reconfigurable network construction, it is necessary to build up different reconfigurable network elements. Without them it is not possible to fully exploit advantages of optical CDMA. Currently this is the most important development challenge that takes into the account not only the technical feasibility but also competition with TDM and WDM technologies. This project is devoted to the solution of this problem.

In conventional CDMA systems, each data bit is encoded into a code sequence (signature sequence), which comprises the address of desired destination. The receiver correlates the received signal with a stored replica of the signature sequence belonging to the desired user and rejects all unwanted signals, i.e. rejects multiple access interference (MAI). The encoding can be realized in time domain (Direct-Sequence Spread Spectrum - DS-SS) or in frequency domain (Frequency Hopped Spread Spectrum-FH-SS).

Usually transmission bandwidth largely exceeds the single channel information bandwidth (bandwidth-duration product greatly exceeds 1). Presently, frequency encoded optical CDMA (OCDMA) algorithms are considered as most suitable for local and metropolitan area networks. The telecommunication providers are waiting for a technology other than WDM and TDMA that allows cost-effective network arrangement and re-arrangement. It seems that spectral CDMA with inexpensive light sources and low-cost integrated optical components can meet their demands.

Major importance is given to the possibility of coding and decoding in the optical domain before optical/electrical or electrical/optical conversion. It is necessary to note that CDMA systems can have both synchronous or asynchronous operation principles. In the second case, each transmitter/receiver pair before decoding must first acquire and track synchronization with each other. In a synchronous OCDMA, in spite of some complication in the system configuration, substantially higher numbers of active users can be accommodated.

As mentioned above, an encoding can be performed in the frequency domain, i.e. code sequences can be mapped inside the optical source spectrum. The spectral amplitude of a source is modulated with a code that specifies certain components of the spectrum to be on or off. In such a network, different transmitters use different codes, which are orthogonal to one another. The receiver can then select the data from the desired transmitter by correlating the spectrally modulated signal with appropriate code. Recently such algorithms have gained substantial attention, due to their inherent capability to synchronization. Furthermore, the channels are independent in the sense of transmitted data bit-rates.

The idea of spectral encoding has been presented in some recent publications. A common encoding apparatus has been used for both coding of broadband optical source (noncoherent OCDMA) and of femtosecond laser light pulse (coherent OCDMA). It consists of pairs of diffractive gratings, lenses and a coding mask, which maps the code sequence pattern into the optical spectrum. The gratings are used for spatially re-composing and further assembling the spectral components, presented by the optical source. The mask (usually liquid crystal modulator) is inserted at the point where spectral components have maximum spectral resolution, and they can be used for amplitude and phase coding. What is needed is a simple, cost effective solution with integrated components instead of complicated bulk devices for use in a real communication system.

Bragg gratings are the right choice for these purposes. Implementation of BG allows us to realize coding in time and/or frequency domain. Inexpensive light sources and potentially high capacity make this algorithm suitable and most effective for local area networks. There are several technologies for the realization of the proposed method. Usually it is suggested that a chain of fiber Bragg gratings be used (FBG) for optical pulse spreading (coding). De-spreading (decoding) can be performed by the same chains, which correspond to the desired channel coding scheme. This system is, however, difficult to realize in commercial networks because of lack of true reconfigurable components.

For future commercial OCDMA networks there is a need for robust, lightweight, low-cost fully-integrated devices that allow simultaneous generation of multiple codes to support more powerful network functionalities and increase data security/privacy. The system described requires a coder and decoder, i.e. a modulator which can independently modulate multiple optical channels with reconfigurable codes (generating any codes from a given code pool) and a receiver which can separate the incoming light into the different wavelength bands to receive each one of them independently and perform the correlation of the code.

This object is, according to its several component aspects of an optical communication system, solved by an encoder according to claim 1, a decoder according to claim 6 and an optical communication system according to claim 11. Preferred embodiments of the invention are subject of the respective dependent claims.

According to the encoder aspect of the invention, it is essential that the encoder comprises a Bragg grating formed in a waveguide portion of an electrooptical material and a plurality of independently, controllable phase shift means associated to the Bragg grating. In particular, the Bragg grating is of the reflection type and the broadband light input and optical signal output are at the same end of the waveguide portion. Futher, specifically, the phase shift means comprise electrodes arranged at both sides of the Bragg grating. In an embodiment of the invention, the encoder comprises, at the broadband light input side, a polarizer portion.

In a further preferred embodiment, the encoder is arranged as an integrated optical chip.

According to the decoder aspect of the invention, the decoder has an encoded optical signal input, an electrical filter control signal input and a decoded optical signal output, and it comprises a Bragg grating formed in a waveguide portion of an electro-optical material and a plurality of independently controllable filter means for passing wavelength encoded input signal, in response to the application of control signals to the filter means. In preferred embodiments of the decoder, the same aspects apply as for the encoder (mentioned above).

An optical communication system according to the invention, comprises a broadband light source, an encoder of the above specified type, an optical transmission medium, an electro-optical decoder unit, and a photodetector unit in a transmission line.

In a first preferred embodiment, the decoder unit comprises a plurality of fixed optical filters, each tuned to a predetermined wavelength, and a corresponding plurality of photodetectors, each arranged at the output of one the filters. On the other hand, in a second preferred embodiment the decoder unit comprises an electrically controllable optical filter and a single photodetector arranged at the filter output. In the latter embodiment, the decoder unit preferably comprises an electro-optical decoder as specified further above.

Furthermore, in an embodiment of the optical communication system, the broadband light source comprises an Er⁺ doped optical fibre. In a further embodiment of the system, the optical transmission medium comprises an optical fibre.

Furthermore, in a preferred network structure of the optical communication system it comprises a plurality of encoders and decoder units arranged at respective nodes of a communication network. Herein, preferably each of the encoders and decoder units is adapted for OCDMA encoding or decoding, respectively.

In the following, the invention will be explained in more detail in connection with the figures of the drawing.

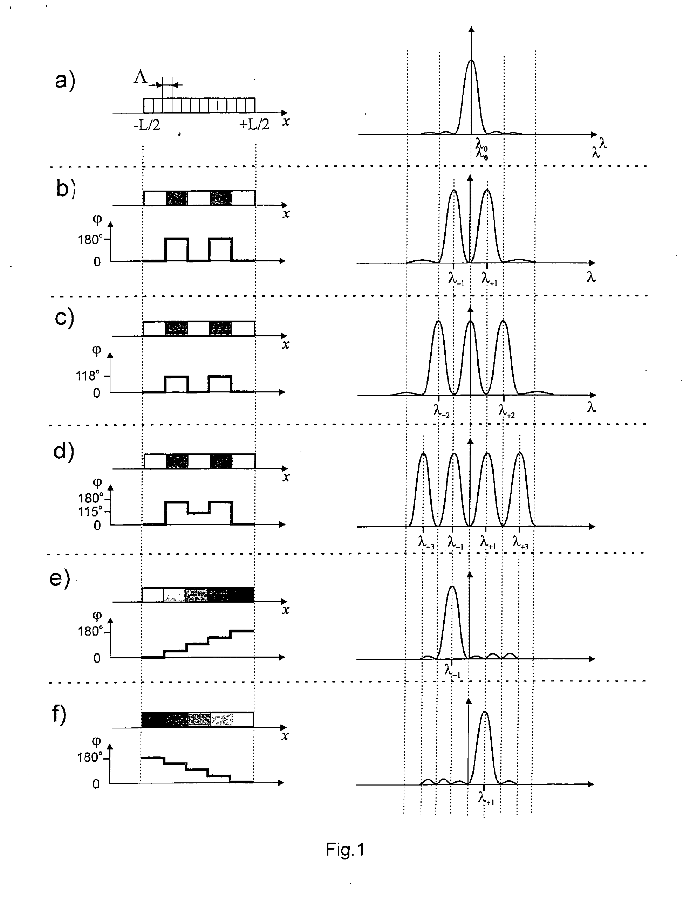

Herein, Figures 1a) to 1f) show schematic diagrams for illustrating a basic principle of the invention,

Fig. 2 shows an electro-optical chip to be used as an encoder or decoder in an embodiment of the invention,

Figures 3a) and 3b) show schematic diagrams illustrating the working principle of a first codec configuration according to the invention and

Figures 4a) and 4b) show schematic diagrams illustrating the working principle of a second codec configuration according to the invention.

Figures 1a) to 1f) serve for considering the encoding principle of the invention by using a conventional reflection phase Bragg grating (Fig. 1a) as an example. It is well known that such a grating is a spectral filter, and its transfer function (i.e., dependence of the reflected light intensity I on wavelength λ) has the form I(λ) ∼|sinλ/λ². The transfer function is shown in Fig. 1a) at the right panel. The maximum reflected light intensity is achieved at the Bragg wavelength λ*₀*. This shape of the transfer function can be regarded as state «1».

Let us now see how the phase profile of the Bragg grating affects the transfer function shape. As a next step, we consider the case when the grating consists of five sections, and the phase of the grating can be varied for each of the sections. Fig. 1b) shows the case when the phase distribution in the grating sections is 9 = 0, 180°, 0, 180°, 0. The transfer function in this case has two maxima. I.e., the maximum light reflection occurs at two wavelengths. It is important to note that the difference between reflected wavelengths exceeds the filter bandwidth. Such a shape of the transfer function can be regarded as state «2».

Fig. 1c) shows the case when the phase distribution in the grating sections is ϕ = 0, 118°, 0, 118°, 0. The transfer function in this case has three maxima, i.e., the maximum light reflection is achieved at three different wavelengths. Such a shape of the transfer function can be regarded as state «3».

Fig. 1d) shows the case when the phase distribution in the grating sections is 9 = 0, 180°, 115°, 180°, 0. The transfer function has four maxima, i.e., the maximum light reflection occurs at four different wavelengths. Such a shape of the transfer function is regarded as state «4».

Figs. 1e) and 1f) show two other cases of phase distribution in the grating sections: <p = 0, 45°, 90°, 135°, 180° or ϕ = 180°, 135°, 90°, 45°, 0. In these cases the transfer function has one maximum shifted to the left or right, respectively, from the Bragg wavelength at the definite spectral interval equal to the grating bandwidth. These shapes of the transfer functions can be regarded as states «5» and «6». Thus, the phase encoding of the grating along the light propagation direction leads to the frequency encoding of the reflected light spectrum. It is evident that in all the examples given above the states of the system are statistically independent (i.e., differing from each other), and therefore they can be used to transmit information. The examples of separation of a grating into two or five sections given above are not the only possible. In the general case the procedure of grating separation into sections is described by the Walsh-Hadamar transformation.

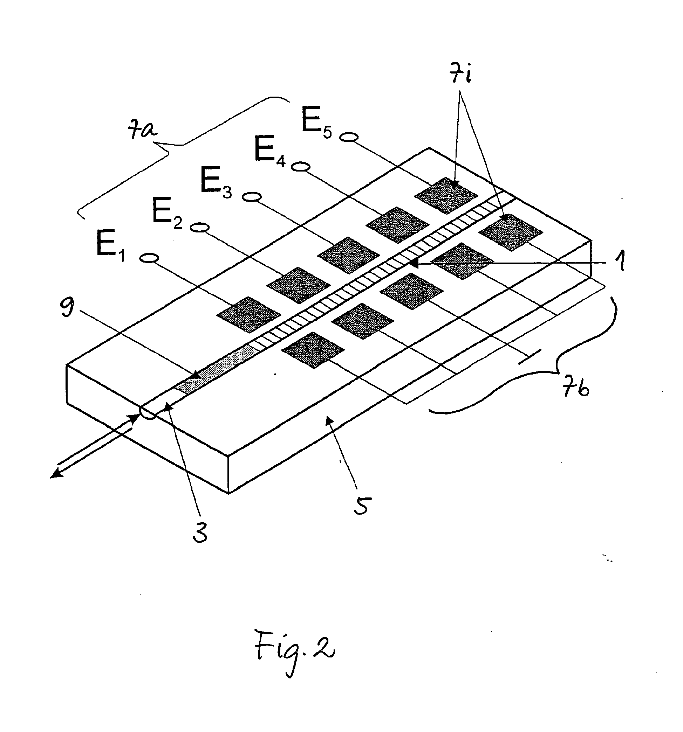

As shown in Fig. 2, an implementation of the phase-frequency encoding algorithm can be achieved by using the electrooptical effect. A reflection Bragg grating 1 is formed in an optical waveguide 3. A waveguide substrate 5 is made of an electrooptic material (such as LiNbO3) Two rows 7a, 7b of electrodes 7i are deposited on both sides of the waveguide. Fig.2 presents the device with 5 pairs of electrodes, which corresponds to the illustrative example shown in Fig.1. The region of the waveguide between the electrodes corresponds to a grating section.

By applying an external electric field E to the electro-optic crystal, its refractive index can be changed, exploiting the linear electro-optic effect.

Hence, if the field is applied to a specified electrode pair, the phase of the light reflected from the section between these electrodes changes, i.e., phase-frequency encoding occurs. Therefore, the device shown in Fig. 2 is a filter with a reconfigurable transfer function.

As an additional option, an input polarizer 9 is integrated into the same waveguide to provide the device operation with nonpolarized light. Thus, by using integrated optical technologies, a waveguide with a polarizer and reflection Bragg grating has been fabricated at one substrate. Such an implementation of the device makes it attractive for practical applications because integrated technologies are inexpensive, reliable, and suited for mass production. Just for this reason we suggest that this device be used as a basic element for building an all-optical CDMA-LAN network.

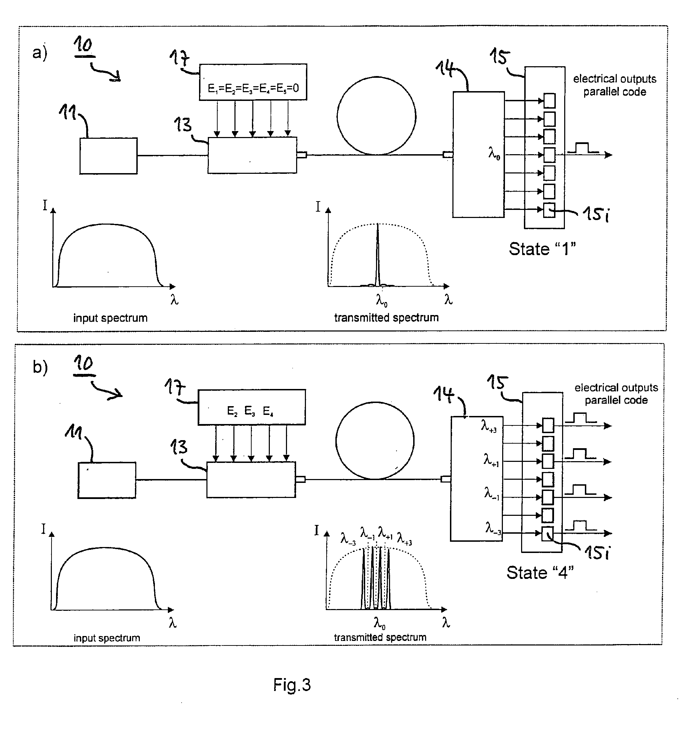

In Figs. 3a) and 3b), it is schematically illustrated how an optical network 10 can be implemented by using the algorithm considered above and an integrated optical chip based on the element shown in Fig. 2. The transmitting part of the network comprises a broad band light source 11 (for example, based on an erbium-doped fiber) and an encoder 13.. The receiving part of the optical network consists of a set 14 of fixed (i.e., nonreconfigurable) optical filters 3 placed in series or parallel, and a corresponding set 15 of photoreceivers 15i. Information is fed into the network by means of an electronic controller 17. The electronic controller has N=5 independent outputs which are connected to corresponding pairs of electrodes at of the encoder 13.

Let us see how the network operates. For example, we consider transmission of state «1» (Fig. 1a) and state «4» (Fig.1d). In state «1», the controlling voltage is not applied to electrodes. Light from the broad-band light source is incident on the *encoder* input. In the case an erbium-doped source is used, the light bandwidth can be 10 ... 30 nm. In this state the grating reflects light only at wavelength *Xo.* The bandwidth of the reflected light corresponds to the spectral selectivity of the grating and is of the order of 0.1 ... 0.2 nm. At the network output there are 7 fixed optical filters, each of which is tuned to the wavelength ranging from A..3 to X+3. Since the grating reflects light only at wavelength Xo, the electric signal will appear only at the output of the photodetectors connected to the given filter. There will be no signals from the outputs of other photodetectors.

Then the electronic controller 17 applies electric fields to the 2nd, 3rd and 4th pair of electrodes simultaneously. The fields provide 180°, 118°, and 180° phase shifts in each corresponding section. With this phase combination, the grating reflects light simultaneously at four wavelengths: λ₋₃ λ₋₁, λ₁, λ₃. Therefore, the electric signal will appear at the outputs of photodetectors 15; having the positions -3, -1, 1 and 3.

Thus, the encoding algorithm and optical network of the invention provide an output electric signal in the format of parallel bit encoding. The rank of encoding corresponds to the number of spectral components reflected by the filter.

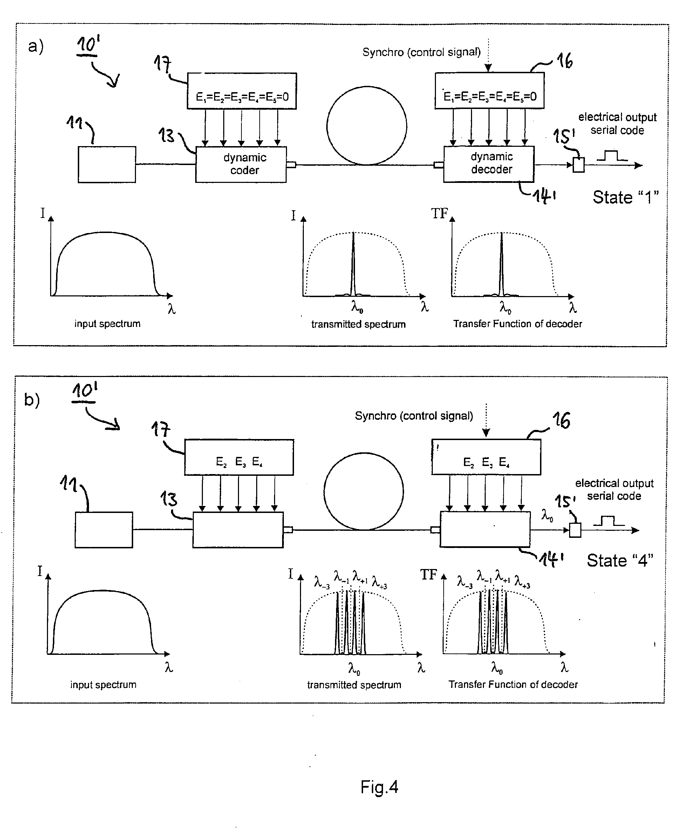

Fig. 4 shows a further all-optical network configuration 10' in which an OCDMA encoding/decoding scheme may be applied. Whereas the broad band light source 11 and the encoder 13 and controller 17 portion, i.e. the transmitting side, of the system 10' are identical to that of Fig. 3, the receiver side is different: To implement a serial output, a dynamic decoder 14' according to the invention is provided, together with an adapted control unit 16, and a single photodetector 15' is sufficient to obtain an electrical output of the system, if the control unit 16 is fed with a control signal corresponding to (i.e. synchronized with) the control signals of the transmission side controller 17.

## Claims

1. An electro-optical encoder, having a broadband light input, an electrical code signal input and an encoded optical signal output, comprising a Bragg grating formed in a waveguide portion of an electrooptical material and a plurality of independently controllable phase shift means associated to the Bragg grating, for generating wavelength encoded components of an input broadband light at the encoder output, in response to the application of code signals to the phase shift means.

2. The electro-optical encoder of claim 1, wherein the Bragg grating is of the reflection type and the broadband light input and optical signal output are at the same end of the waveguide portion.

3. The electro-optical encoder of claim 1 or 2, wherein the phase shift means comprise electrodes arranged at both sides of the Bragg grating.

4. The electro-optical encoder of one of the preceding claims, comprising, at the broadband light input side, a polarizer portion.

5. The electro-optical encoder of one of the preceding claims, arranged as an integrated optical chip.

6. An electro-optical decoder, having an encoded optical signal input, an electrical filter control signal input and a decoded optical signal output, comprising a Bragg grating formed in a waveguide portion of an electro-optical material and a plurality of independently controllable filter means for passing wavelength encoded input signals, in response to the application of control signals to the filter means.

7. The electro-optical decoder of claim 6, wherein the Bragg grating is of the reflection type and the broadband light input and optical signal output are at the same end of the waveguide portion.

8. The electro-optical decoder of claim 6 or 7, wherein the filter means comprise electrodes arranged at both sides of the Bragg grating.

9. The electro-optical decoder of claim 7 or 8, arranged as an integrated optical chip.

10. A codec of an optical communication system, comprising an encoder of one of claims 1 to 5 and a decoder of one of claims 7 to 9, formed as switchable functions of a single electrooptical element, wherein the broadband light input of the encoder corresponds to the optical signal output of the decoder, the encoded optical signal output of the encoder corresponds to the encoded optical signal input of the decoder, and the phase shift means of the encoder corresponds to the filter means of the decoder.

11. An optical communication system, comprising a broadband light source, an encoder of one of claims 1 to 5, an optical transmission medium, an electro-optical decoder unit, and a photodetector unit in a transmission line.

12. The optical communication system of claim 11, wherein the decoder unit comprises a plurality of fixed optical filters, each tuned to a predetermined wavelength, and a corresponding plurality of photodetectors, each arranged at the output of one the filters.

13. The optical communication system of claim 11, wherein the decoder unit comprises an electrically controllable optical filter and a single photodetector arranged at the filter output.

14. The optical communication system of claim 13, wherein the decoder unit comprises an electro-optical decoder of one of claims 6 to 9.

15. The optical communication system of one of claims 11 to 14, wherein the broadband light source comprises an Er⁺ doped optical fibre.

16. The optical communication system of one of claims 11 to 15, wherein the optical transmission medium comprises an optical fibre.

17. The optical communication system of one of claims 1 to 16, comprising a plurality of encoders and decoder units arranged at respective nodes of a communication network.

18. The optical communication system of claim 17, wherein each of the encoders and decoder units is adapted for OCDMA encoding or decoding, respectively.
